# EUROPEAN PATENT SPECIFICATION

(11) **EP 1 998 304 B1**
(45) Date of publication and mention of the grant of the patent: **12.08.2009**
(21) Application number: 07425303.0
(22) Date of filing: 21.05.2007
(51) Int. Cl.: G08G 1/015, G01S 13/00, G08B 13/24

(54) **System for monitoring vehicle transit along a highway section**
System zur Überwachung des Fahrzeugaufkommens in einem Autobahnabschnitt
Système de surveillance d'un passage de véhicule le long d'une section d'autoroute

(43) Date of publication of application: 03.12.2008
(73) Proprietor: C.R.F. Società Consortile per Azioni, 10043 Orbassano (Torino) (IT)
(72) Inventor: Zangherati, Silvia, 10043 Orbassano (IT); Corongiu, Alessio, 10043 Orbassano (IT)
(74) Representative: Bergadano, Mirko

(56) References cited:
- EP-A- 0 860 804
- GB-A- 2 217 545
- US-A- 5 210 521
- US-A1- 2006 232 440
- US-B1- 6 417 783

## Description

The present invention relates to a method and system for monitoring vehicle transit along a highway section.

Vehicle transit along a highway section, e.g. preferential city or motorway lanes, is monitored by systems based on transmitting-receiving stations, which transmit directional signals, with given spectral characteristics, onto the monitored highway section, and detect vehicle passage on the basis of the characteristics of the signals reflected by the vehicles in transit which, in passing, alter the signal transmitted by the transmitting-receiving stations.

The efficiency of these systems, and the methods implemented by them, depends closely on the quality of the incoming signals, which is seriously affected by interference, weather conditions, etc.

US 2006/232440 A1 discloses a microwave detection system including a transmitter configured to transmit a signal along a path to detect an intruder to a monitored zone and a modulating reflector configured to receive the transmitted signal to generate a modulated signal having a characteristic introduced by said modulating reflector, the modulating reflector being configured to transmit the modulated signal. The system also includes a receiver located to receive the modulated signal and an adaptive threshold adjustment unit configured for providing a variable detection threshold responsive to a change in a gain of the system. The system further includes a processor configured for processing the modulated signal provided by the receiver and configured for measuring a characteristic in the processed modulated signal with respect to the variable detection threshold provided by the adaptive threshold adjustment unit.

It is an object of the present invention to provide a method and system for monitoring vehicle transit along a highway section, designed to ensure reliable operation and precise detection of vehicle transit, regardless of incoming signal quality.

According to the present invention, there are provided a method and system for monitoring vehicle transit along a highway section, as claimed in the accompanying Claims.

A preferred, non-limiting embodiment of the present invention will be described by way of example with reference to the accompanying drawings, in which:
Figure 1 shows a schematic of a monitoring system implementing the method according to the present invention;
Figure 2 shows a flow chart of the monitoring method according to the present invention;
Figure 3 shows variations in the power level of a signal, on which detection of vehicle transit along a highway section is based.

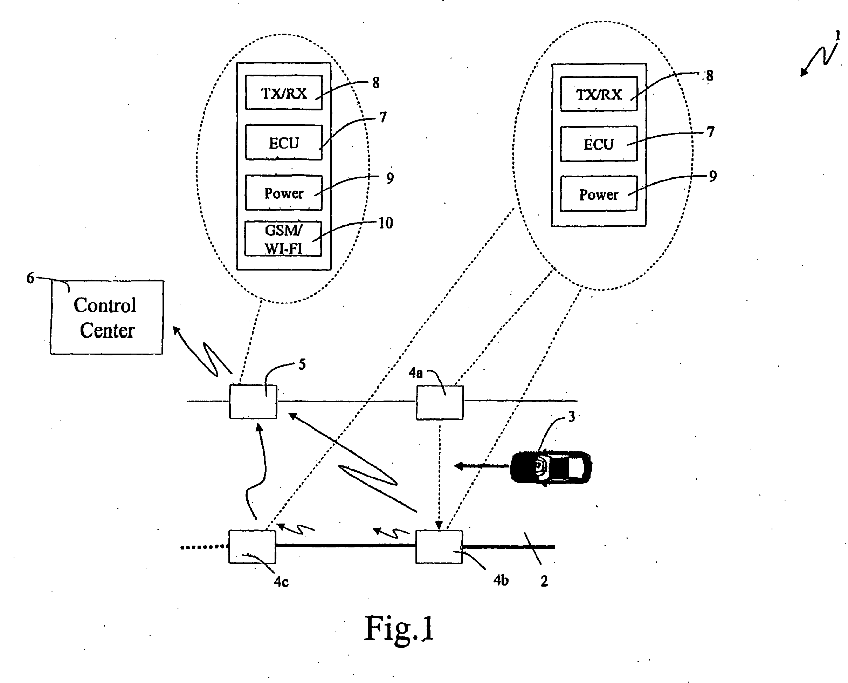

Number 1 in Figure 1 indicates as a whole a system for monitoring vehicle transit along a highway section 2, and implementing the monitoring method according to the present invention.

By way of a non-limiting example, the highway section 2 shown schematically in Figure 1 is a lane of a one-way highway, e.g. motorway or main road, travelled by vehicles, e.g. vehicle 3.

More specifically, monitoring system 1 according to the invention comprises:
- a known self-configuring wireless sensor network comprising a number of transmitting-receiving stations 4a, 4b, 4c, which are installed on both sides of highway section 2, and are configured to communicate with one other by known communication protocols specific to this type of network, and to perform specific functions as described below;
- a transmitting-receiving Gateway station 5 located close to the monitored highway section 2 to collect information from transmitting-receiving stations 4a, 4b, 4c; and
- a remote control centre 6 communicating with Gateway station 5.

More specifically, each pair of transmitting-receiving stations 4a, 4b of the wireless sensor network installed on opposite sides of highway section 2 is configured to detect passage of vehicle 3 along highway section 2, to type-classify the vehicles in transit on the basis of a wireless signal transmitted by transmitting-receiving station 4a, and to transmit the vehicle transit and type information to Gateway station 5.

Transmitting-receiving stations 4c, on the other hand, are configured exclusively to transmit the vehicle transit and type information, processed by transmitting-receiving station 4b, to Gateway station 5, which transmits the information to remote control centre 6. As shown in the enlarged detail in Figure 1, transmitting-receiving stations 4a, 4b, 4c preferably all have the same hardware configuration, and each comprise:
- a control and processing unit 7 configured to control operation of transmitting-receiving station 4a, 4b, 4c;
- a transmitting-receiving unit 8; and
- an independent power source 9.

The specific functions of transmitting-receiving stations 4a, 4b, 4c are therefore performed by specific software stored in control and processing unit 7 of each station 4a, 4b, 4c. More specifically, each transmitting-receiving station 4a comprises a sensor or device (not shown), e.g. a microphone or television camera, for detecting arrival of vehicle 3, and its transmitting-receiving unit 8 is configured to transmit a directional wireless signal *Sₜ₍ᵢ₎,* of given spectral characteristics and power, to transmitting-receiving station 4b.

More specifically, transmitting-receiving unit 8 and control and processing unit 7 of each transmitting-receiving station 4b are configured, respectively, to receive the wireless signal *Sₜ₍ᵢ₎* from transmitting-receiving station 4a, and to control operation of station 4b and process the incoming signal *Sₜ₍ᵢ₎,* in accordance with the method of the invention, to determine transit of vehicle 3 along highway section 2, and type-classify the vehicle in transit.

More specifically, transmitting-receiving Gateway station 5 may be, for example, a GSM or WI/FI transmitting-receiving unit, which transmits the vehicle transit and type information to remote control centre 6, where the information is stored and analysed.

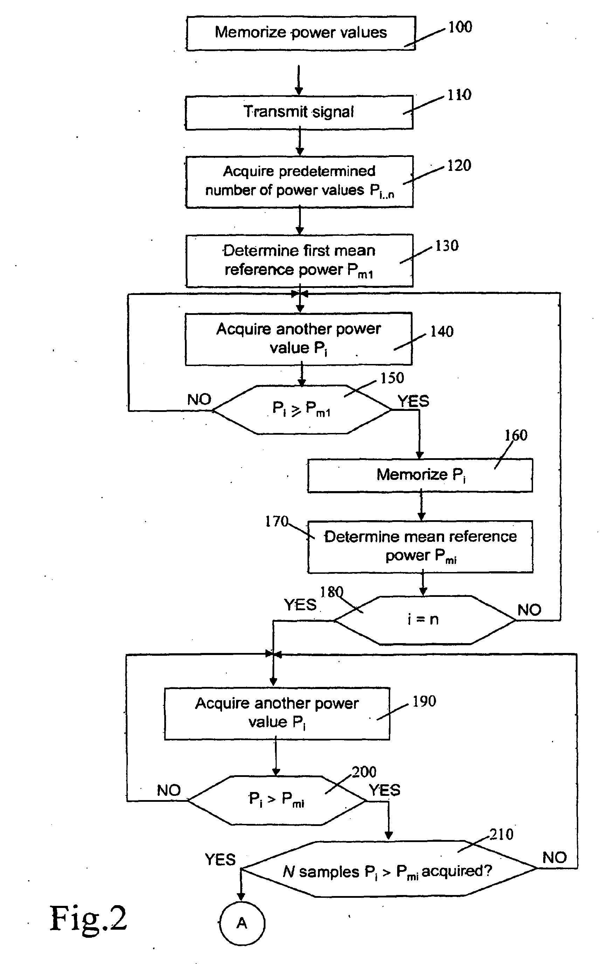

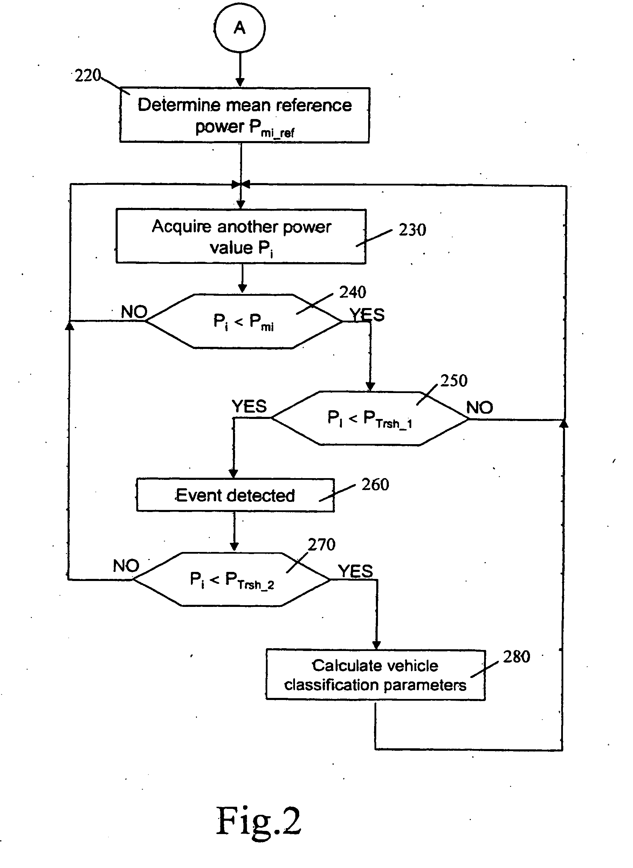

More specifically, vehicles in transit along monitored highway section 2 are detected and type-classified in accordance with the method of the invention, the various steps of which are shown in the Figure 2 flow chart.

Since vehicle passage is determined by analysing the power of the signal received by transmitting-receiving station 4b when the system is turned on, the algorithm provides for calculating a mean power value or so-called "reference power", with which the instantaneous power is compared.

When transmitting-receiving stations 4a and 4b are turned on, therefore, a method step is performed to eliminate wireless signals received in the presence of signal-power-reducing interference, and to determine a mean reference power value *P_{mi-ref}* of wireless signal *Sₜ₍ᵢ₎*, that can be relied on to detect vehicle transit along highway section 2 and type-classify the vehicles.

Accordingly, when stations 4a and 4b are turned on, transmitting-receiving unit 8 of transmitting-receiving station 4a begins transmitting wireless signal *Sₜ₍ᵢ₎* - e.g. a 433 MHz, 868 MHz, or 2.4 GHz signal - at regular time intervals Δt of, say, 100 ms (block 110).

Wireless signal *Sₜ₍ᵢ₎* is received by transmitting-receiving unit 8 of station 4b, which acquires and memorizes, in its control and processing unit 7, a number of power values *P_{1..n}* of a number of incoming wireless signals *Sₜ₍ᵢ₎,* e.g. the power values of the first 50 signals *S_{t(1..50)}* (block 120).

On the basis of the 50 memorized power values *P_{i..n}*, control and processing unit 7 of station 4b then calculates and memorizes a first mean reference power *Pₘ₁* of wireless signal *Sₜ₍ᵢ₎* (block 130).

The value of first mean reference power *Pₘ₁,* however, cannot be relied on, in that, in the event transmitting-receiving station 4a is turned on while a vehicle is passing, the signals *Sₜ₍ᵢ₎* transmitted while the vehicle is between transmitting-receiving stations 4a and 4b would be attenuated by the vehicle, and would reach transmitting-receiving unit 8 of station 4b with a power level too low to determine the mean reference power *Pₘᵢ* of signal *Sₜ₍ᵢ₎*.

After acquiring the first 50 power values *P_{1..50}* of the first 50 incoming signals, therefore, control and processing unit 7 of station 4b, to check the reliability of the calculated first mean reference power *Pₘ₁,* acquires another power value *Pᵢ* of signal *Sₜ₍ᵢ₎* (block 140), compares it with the calculated first mean reference power *Pₘ₁* (block 150), and, if power *Pᵢ* of signal *Sₜ₍ᵢ₎* is less than first mean reference power *Pₘ₁* (NO output of block 150), rejects value *Pᵢ* of signal *Sₜ₍ᵢ₎,* and repeats the steps of blocks 140 and 150 to acquire the power values *Pᵢ* of successive signals *Sₜ₍ᵢ₎* until a signal *Sₜ₍ᵢ₎* is acquired with a power *Pᵢ* greater than or equal to first mean reference power *Pₘ₁.*

In which case, control and processing unit 7 of station 4b eliminates the oldest power value in the group of power values *P_{1..50},* replaces it with the power value *Pᵢ* greater than or equal to first mean reference power *Pₘ₁* (block 160), and calculates a second mean reference power *Pₘᵢ* on the basis of the power values *P_{2..50}* still in the memory, and of power *Pᵢ* greater than or equal to the first mean reference power (block 170).

In block 180, control and processing unit 7 of station 4b determines whether the number of power values *Pᵢ* memorized in block 160 equals the number of power values *P_{1..n},* e.g. 50, memorized in block 120. If it does not (NO output of block 180), block 180 goes back to block 140, which acquires another power value *Pᵢ*. And the block 140-180 procedure is repeated by control and processing unit 7 of station 4b until the number of power values *Pᵢ* memorized in block 160 equals the number of power values *P_{1..n},* e.g. 50, memorized in block 120.

By the end of the block 140-180 procedure, the reliable mean reference power value *P_{mi-ref},* by which control and processing unit 7 of station 4b detects vehicle transit along highway section 2, is obtained.

At this point, in block 200, control and processing unit 7 of station 4b compares each new power value *Pᵢ* of signal *Sₜ₍ᵢ₎* acquired in block 190 with the last value of the calculated second mean reference power *Pₘᵢ,* and memorizes all the new power values *Pᵢ* greater than the last mean reference power *Pₘᵢ.* If the new power value *Pᵢ* acquired in block 190 is less than or equal to the last mean reference power *Pₘᵢ,* control and processing unit 7 of station 4b rejects the new power value *Pᵢ* acquired, and repeats the block 190-200 procedure.

In block 210, control and processing unit 7 of station 4b determines whether the number of power values *Pᵢ* greater than the last calculated mean reference power *Pₘᵢ* exceeds a given threshold value, e.g. 100. If it does not (NO output of block 210), block 210 goes back to block 190, which acquires a new power value *Pᵢ.* If it does (YES output of block 210), in block 220, control and processing unit 7 of station 4b determines the value of mean reference power *P_{mi-ref}* on the basis of the power values Pi acquired in block 200 and greater than second mean reference power *Pₘᵢ*.

The purpose of the block 190-210 procedure of determining mean reference power *P_{mi-ref}* is to ensure a reliable mean reference power value by which to detect vehicle transit along the highway section, and to eliminate the effect of factors - such as accidental variations in power values *Pᵢ* of signal *Sₜ₍ᵢ₎* and/or weather conditions, e.g. rain, fog, etc., causing a reduction in power *Pᵢ* of signal *Sₜ₍ᵢ₎* - which would result in a variation of mean reference power *P_{mi-ref}.* In fact, if mean reference power *P_{mi-ref}* were determined on the basis of power values *Pᵢ* which, due to accidental variations, are lower than mean reference power *Pₘᵢ,* system operation could be compromised, in that a variation in power caused by an accidental event starts and ends sharply, and only lasts for a few consecutive signals *Sₜ₍ᵢ₎.* Consequently, if mean reference power *Pₘᵢ* were updated using these values, its own value would be seriously altered. Control and processing unit 7 of station 4b, in fact, being unable to recognize an accidental event beforehand, would in no way react to a sharp variation in power *Pᵢ* with respect to normal values, but would use these values to calculate mean reference power *P_{mi-ref},* thus altering its value and so impairing the reliability of monitoring system 1, which would no longer be able to accurately determine the start and end of passage of vehicle 3.

Once mean reference power *P_{mi-ref}* is determined, control and processing unit 7 of station 4b can therefore start detecting vehicle transit along highway section 2.

Accordingly, control and processing unit 7 of station 4b acquires a new power value Pᵢ (block 230), compares it with mean reference power *P_{mi-ref},* and, if it is greater than or equal to mean reference power value *P_{mi-ref}* (NO output of block 240), rejects it, on the grounds of it indicating no vehicle travelling along highway section 2, and block 240 goes back to block 230, which acquires the next power value *Pᵢ.* Conversely, if power value *Pᵢ* is less than mean reference power *P_{mi-ref},* this means vehicle 3 is probably travelling along monitored highway section 2.

More specifically, to determine whether vehicle 3 is actually travelling along monitored highway section 2, or the reduction in power *Pᵢ* with respect to mean reference power *P_{mi-ref}* has been caused by an accidental event, control and processing unit 7 of station 4b determines (block 250) whether power *Pᵢ* of the incoming signal *Sₜ₍ᵢ₎* is below a predetermined first threshold value *Pₜᵣₛₕ₁* indicating an event. If power *Pᵢ* of the incoming signal *Sₜ₍ᵢ₎* is greater than or equal to first threshold value *Pₜᵣₛₕ₁*, the current power value *Pᵢ* is rejected, by being irrelevant for vehicle transit detection purposes, and block 250 goes back to block 230, which acquires power value *Pᵢ* of the next signal *Sₜ₍ᵢ₎*.

Conversely (YES output of block 250), control and processing unit 7 of station 4b classifies the event (block 260), and determines whether power *Pᵢ* of the incoming signal *Sₜ₍ᵢ₎* is also below a predetermined second threshold value *Pₜᵣₛₕ₂* indicating transit of a vehicle along highway section 2.

If power *Pᵢ* of the incoming signal *Sₜ₍ᵢ₎* is greater than second threshold value *Pₜᵣₛₕ₂* (NO output of block 270), block 270 goes back to block 230, which acquires the next power value *Pᵢ,* in that the reduction in power *Pᵢ* has been caused by an event, as opposed to transit of a vehicle.

If power *Pᵢ* of the incoming signal *Sₜ₍ᵢ₎* is also below second threshold value *Pₜᵣₛₕ₂* (YES output of block 270), however, this means a vehicle is actually travelling along highway section 2, so block 270 goes on to a block 280, in which control and processing unit 7 of station 4b calculates in known manner a set of parameters by which to type-classify the vehicle travelling along highway section 2.

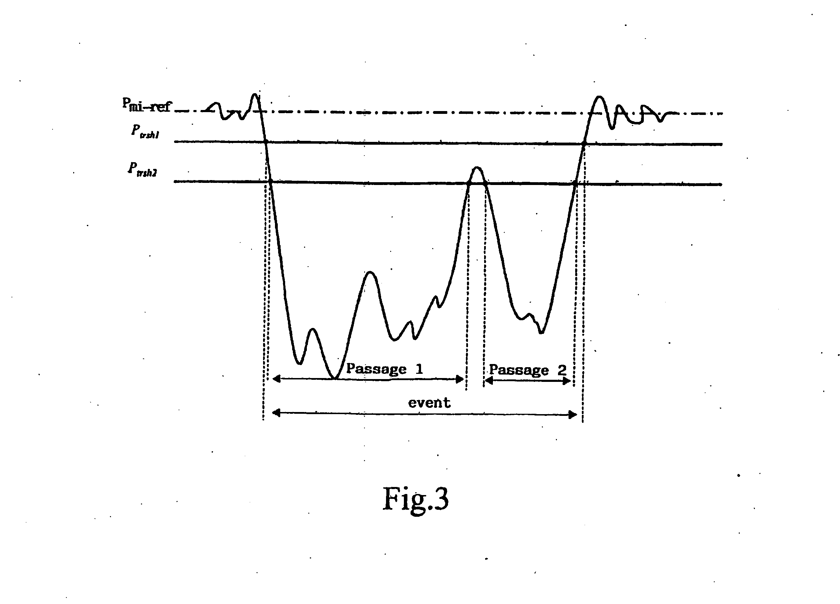

The method steps in blocks 250-280 for detecting an event and/or vehicle transit along the monitored highway section are shown in Figure 3, which shows the two threshold values *Pₜᵣₛₕ₁, Pₜᵣₛₕ₂,* and the pattern of power *Pᵢ* of a received signal *Sₜ₍ᵢ₎* during transit of a vehicle.

In particular, Figure 3 shows the mean reference power *P_{mi-ref}* by a straight, dot-and-dash line; a first threshold value *Pₜᵣₛₕ₁* indicating an event; and the second threshold value *Pₜᵣₛₕ₂* indicating passage of a vehicle along the highway section by respective straight, continous lines; and the variation of power *Pᵢ*; of the received signal *Sₜ₍ᵢ₎* caused by passage of a vehicle.

More specifically, as shown clearly in Figure 3, as the vehicle approaches, the power *Pᵢ* of the received signal *Sₜ₍ᵢ₎* is first attenuated and exceeds first threshold value *Pₜᵣₛₕ₁* indicating an event, i.e. approach of the vehicle, and then falls sharply to also exceed second threshold value *Pₜᵣₛₕ₂* as the vehicle travels past stations 4a and 4b.

The method according to the invention has the main advantage of being easy to implement, and highly reliably monitoring vehicle transit along a highway section.

Clearly, changes may be made to the method and system as described and illustrated herein without, however, departing from the scope of the present invention as defined in the accompanying Claims.

## Claims

1. A system (1) for monitoring automotive vehicles (3) passing along a road (2), **characterized by** a first transmitting-receiving station (4b) and at least a second transmitting-receiving station (4a) configured to communicate with each other via wireless signals (*S*_{*t*(*i*)}) , and arranged on opposite sides of the road (2) so that the wireless signals (*S*_{*t*(*i*)}) exchanged therebetween intersects passing vehicles (3); the first transmitting-receiving station (4b) being further configured to detect passing vehicles (3) based on received wireless signals (*S*_{*t*(*i*)}) transmitted by the second transmitting-receiving station (4a), by:
- computing a reference signal power (*P_{mi-ref}*) based on powers (*Pᵢ*) of wireless signals (*S*_{*t*(*i*)}) received in the absence of passing vehicles (3) or other interferences which, otherwise, would result in the powers of the received wireless signals *(Sₜ₍ᵢ₎)* being reduced;
- comparing the power of a received wireless signal (*S*_{*t*(*i*)}) with the reference signal power (*P_{mi-ref}*) ; and
- detecting a passing vehicle (3) based on an outcome of the comparison;
wherein the first transmitting-receiving station (4a) is configured to compute the reference signal power (*P*_{*mi*-}*_{ref})* by :
- computing and storing powers (Pᵢ) of a given number of wireless signals (*S*_{*t*(*i*)}) received in the absence of passing vehicles (3) or other interferences which, otherwise, would result in the powers of the received wireless signals (*S*_{*t*(*i*)}) being reduced; and
- computing the reference signal power (*P_{mi-ref}*) based on the stored powers (*Pᵢ*);
and wherein the first transmitting-receiving station (4a) is further configured to compute and store powers (*Pᵢ*) of a given number of wireless signals (*S*_{*t*(*i*)}) received in the absence of passing vehicles (3) or other interferences which, otherwise, would result in the powers of the received wireless signals (*S*_{*t*(*i*)}) being reduced, by:
- computing and storing initial powers (*Pᵢ*) of a given initial number of received wireless signals (*S*_{*t*(*i*)});
- computing an average power (*Pₘ₁)* based on the stored initial powers (*Pᵢ*);
- computing powers (*Pᵢ*) of subsequently received wireless signals *(Sₜ₍ᵢ₎);*
- comparing the powers (Pᵢ) of subsequently received wireless signals (*S*_{*t*(*i*)}) with the average power (*Pₘ₁) ;*
- if the power *(Pᵢ)* of a subsequently received wireless signal (*Sₜ₍ᵢ₎)* is equal to or grater than the average power (*Pₘ₁*) :
- replacing one of the stored initial powers (Pᵢ) with the power (Pᵢ) of the subsequently received wireless signal (*Sₜ₍ᵢ₎*) ; and
- re-computing the average power (*Pₘᵢ*) until all the stored initial powers (*Pᵢ*) have been replaced;
- when all the stored initial powers (*Pᵢ*) have been replaced:
- computing powers (*Pᵢ*) of subsequently received wireless signals (*S*_{*t*(*i*)});
- comparing the powers (*Pᵢ*) of subsequently received wireless signals (*S*_{*t*(*i*)}) with the lastly computed average power (*Pₘᵢ*);
- storing powers (*Pᵢ*) of a given number of subsequently received wireless signals (*S*_{*t*(*i*)}) and that are equal to or grater than the lastly computed average power (*Pₘᵢ*); and
- computing the reference signal power (*P_{mi-ref}*) based on the stored powers (*Pᵢ*).

2. The system of claim 1, wherein the first transmitting-receiving station (4a) is configured to compute the reference signal power (*P_{mi-ref}*) as an average of the stored powers (*Pᵢ*) .

3. The system of claim 1 or 2, wherein the power (*Pᵢ*) of the subsequently received wireless signal *(Sₜ₍ᵢ₎)* replaces the earliest one among the stored initial powers (*Pᵢ*).

4. The system of any one of the preceding claims, wherein the average power (*Pₘ₁*) is computed as an average of the stored initial powers (*Pᵢ*).

5. The system of any one of the preceding claims, wherein the first transmitting-receiving station (4a) is configured to detect a passing vehicle (3) based on an outcome of the comparison of the power of the received wireless signal (*S*_{*t*(*i*)}) with the reference signal power (*P_{mi-ref}*) by:
- if the power of the received wireless signal (*S*_{*t*(*i*)}) is lower than the reference signal power (*P_{mi-ref}*), comparing the power of the received wireless signal *(Sₜ₍ᵢ₎)* with a first threshold value (*P_{Trsh}_₁*) lower than the reference signal power (*P_{mi-ref}*) : and
- detecting a passing vehicle (3) if the power of a received wireless signal (*Sₜ₍ᵢ₎*) is lower than the first threshold value (*P_{Trsh_1})*

6. The system of claim 5, wherein the first transmitting-receiving station (4a) is configured to detect a passing vehicle (3) based on an outcome of the comparison of the power of the received wireless signal (*Sₜ₍ᵢ₎*) with the reference signal power *(P_{mi-ref})* by further:
- if the power of the received wireless signal (*Sₜ₍ᵢ₎*) is lower than the first threshold value (*P_{Trsh_1}*), comparing the power of the received wireless signal (*Sₜ₍ᵢ₎*) with a second threshold value (*P_{Trsh_2}*) lower than the first threshold value (*P_{Trsh_1}*); and
- detecting a passing vehicle (3) if the power of a received wireless signal (*Sₜ₍ᵢ₎*) is also lower than the second threshold value (*P_{Trsh_2}*) .

7. The system of any one of the preceding claims, wherein the first and second transmitting-receiving stations (4b, 4a) are part of a wireless sensor network (4a, 4b, 4c, 5), which further includes a transmitting-receiving station (5) configured to operate as a gateway to collect and transmit to a remote control centre (6) data related to detected passing vehicles (3)

## Patentansprüche

1. System (1) zum Überwachen von Kraftfahrzeugen (3), die eine Fahrbahn (2) entlangfahren, **gekennzeichnet durch** eine erste Sende-Empfangs-Station (4b) und mindestens eine zweite Sende-Empfangs-Station (4a), die so eingerichtet sind, dass sie über Drahtlos-Signale (Sₜ₍ᵢ₎) miteinander kommunizieren, und die auf gegenüberliegenden Seiten der Fahrbahn (2) positioniert sind, so dass die Drahtlos-Signale (Sₜ₍ᵢ₎), die dazwischen ausgetauscht werden, vorbeifahrende Fahrzeuge (3) kreuzen, wobei die erste Sende-Empfangs-Station (4b) ferner zum Detektieren von vorbeifahrenden Fahrzeugen (3) auf der Grundlage von empfangenen Drahtlos-Signalen (Sₜ₍ᵢ₎) eingerichtet ist, die von der zweiten Sende-Empfangs-Station (4a) gesendet werden, mittels:
- Berechnens einer Referenz-Signal-Leistung (P_{mi-ref}) auf der Grundlage von Leistungen (Pᵢ) von Drahtlos-Signalen (Sₜ₍ᵢ₎), die in der Abwesenheit von vorbeifahrenden Fahrzeugen (3) oder anderen Interferenzen empfangen werden, die andernfalls zu einer Verringerung der Leistungen der empfangenen Drahtlos-Signale (Sₜ₍ᵢ₎) führen würden,
- Vergleichens der Leistung eines empfangenen Drahtlos-Signals (Sₜ₍ᵢ₎) mit der Referenz-Signal-Leistung (P_{mi-ref}) , und
- Detektierens eines vorbeifahrenden Fahrzeugs (3) auf der Grundlage eines Ergebnisses des Vergleichs,
wobei die erste Sende-Empfangs-Station (4a) zum Berechnen der Referenz-Signal-Leistung (Pi_{mi-ref}) eingerichtet ist, mittels:
- Berechnens und Speicherns von Leistungen (Pᵢ) einer bestimmten Anzahl von Drahtlos-Signalen (Sₜ₍ᵢ₎), die in der Abwesenheit von vorbeifahrenden Fahrzeugen (3) oder anderen Interferenzen empfangen werden, die andernfalls zu einer Verringerung der Leistungen der empfangenen Drahtlos-Signale (Sₜ₍ᵢ₎) führen würden, und
- Berechnens der Referenz-Signal-Leistung (P_{mi-ref}) auf der Grundlage der gespeicherten Leistungen (Pᵢ),
wobei die erste Sende-Empfangs-Station (4a) ferner zum Berechnen und Speichern von Leistungen (Pᵢ) einer bestimmten Anzahl von Drahtlos-Signalen (Sₜ₍ᵢ₎) eingerichtet ist, die in Abwesenheit von vorbeifahrenden Fahrzeugen (3) oder anderen Interferenzen empfangen werden, die andernfalls zu einer Verringerung der Leistungen der empfangenen Drahtlos-Signale (Sₜ₍ᵢ₎) führen würden, mittels:
- Berechnens und Speicherns von Anfangsleistungen (Pᵢ) einer bestimmten anfänglichen Anzahl von empfangenen Drahtlos-Signalen (Sₜ₍ᵢ₎),
- Berechnens einer durchschnittlichen Leistung (Pₘ₁) auf der Grundlage der gespeicherten Anfangsleistungen (Pᵢ),
- Berechnens von Leistungen (Pᵢ) von anschließend empfangenen Drahtlos-Signalen (Sₜ₍ᵢ₎),
- Vergleichens der Leistungen (Pᵢ) von anschließend empfangenen Drahtlos-Signalen (Sₜ₍ᵢ₎) mit der durchschnittlichen Leistung (Pₘ₁),
- wenn die Leistung (Pᵢ) von einem anschließend empfangenen drahtlosen Signal (Sₜ₍ᵢ₎) größer oder gleich der durchschnittlichen Leistung (Pₘ₁) ist:
- Ersetzens von einer der gespeicherten Anfangsleistungen (Pᵢ) **durch** die Leistung (Pᵢ) des anschließend empfangenen Drahtlos-Signals (Sₜ₍ᵢ₎), und
- erneuten Berechnens der durchschnittlichen Leistung (Pₘᵢ), bis alle gespeicherten Anfangsleistungen (Pᵢ) ersetzt worden sind,
- wenn alle gespeicherten Anfangsleistungen (Pᵢ) ersetzt worden sind:
- Berechnens der Leistungen (Pᵢ) von anschließend empfangenen Drahtlos-Signalen (Sₜ₍ᵢ₎),
- Vergleichens der Leistungen (Pᵢ) von anschließend empfangenen Drahtlos-Signalen (Sₜ₍ᵢ₎) mit der zuletzt berechneten durchschnittlichen Leistung (Pₘᵢ),
- Speicherns von Leistungen (Pᵢ) einer bestimmten Anzahl von anschließend empfangenen Drahtlos-Signalen (Sₜ₍ᵢ₎), die ferner größer oder gleich der zuletzt berechneten durchschnittlichen Leistung (Pₘᵢ) sind, und
- Berechnens der Referenz-Signal-Leistung (P_{mi-ref}) auf der Grundlage der gespeicherten Leistungen (Pᵢ).

2. System gemäß Anspruch 1, wobei die erste Sende-Empfangs-Station (4a) zum Berechnen der Referenz-Signal-Leistung (4a) als Durchschnitt der gespeicherten Leistungen (P₁) eingerichtet ist.

3. System gemäß Anspruch 1 oder 2, wobei die Leistung (Pᵢ) des anschließend empfangenen Drahtlos-Signals (Sₜ₍ᵢ₎) die früheste aus den gespeicherten Anfangsleistungen (Pᵢ) ersetzt.

4. System gemäß einem der vorhergehenden Ansprüche, wobei die durchschnittliche Leistung (Pₘ₁) als ein Durchschnitt der gespeicherten Anfangsleistungen (Pᵢ) berechnet wird.

5. System gemäß einem der vorhergehenden Ansprüche, wobei die erste Sende-Empfangs-Station (4a) zum Detektieren eines vorbeifahrenden Fahrzeugs (3) auf der Grundlage eines Ergebnisses des Vergleichs der Leistung des empfangenen Drahtlos-Signals (Sₜ₍ᵢ₎) mit der Referenz-signal-Leistung (P_{mi-ref}) eingerichtet ist, mittels:
- wenn die Leistung des empfangenen Drahtlos-Signals (Sₜ₍ᵢ₎) kleiner als die Referenz-Signal-Leistung (P_{mi-ref}) ist, Vergleichens der Leistung des empfangenen Drahtlos-Signals (Sₜ₍ᵢ₎) mit einem ersten Schwellwert (P_{Trsh-1}), der kleiner als die Referenz-Signal-Leistung (P_{mi-ref}) ist, und
- Detektierens eines vorbeifahrenden Fahrzeugs (3), wenn die Leistung eines empfangenen Drahtlos-Signals (Sₜ₍ᵢ₎) kleiner als der erste Schwellwert (P_{Trsh_1}) ist.

6. System gemäß Anspruch 5, wobei die erste Sende-Empfangs-Station (4a) zum Detektieren eines vorbeifahrenden Fahrzeugs (3) auf der Grundlage eines Ergebnisses des Vergleichs der Leistung des empfangenen Drahtlos-Signals (Sₜ₍ᵢ₎) mit der Referenz-Signal-Leistung (P_{mi-ref}) eingerichtet ist, ferner mittels:
- wenn die Leistung des empfangenen Drahtlos-Signals (Sₜ₍ᵢ₎) kleiner als der erste Schwellwert (P_{Trsh_1}) ist, Vergleichens der Leistung des empfangenen Drahtlos-Signals (Sₜ₍ᵢ₎) mit einem zweiten Schwellwert (P_{Trsh_2}), der kleiner als der erste Schwellwert (P_{Trsh_1}) ist, und
- Detektierens eines vorbeifahrenden Fahrzeugs (3), wenn die Leistung eines empfangenen Drahtlos-Signals (Sₜ₍ᵢ₎)-ebenfalls kleiner als der zweite Schwellwert (P_{Trsh_2}) ist.

7. System gemäß einem der vorhergehenden Ansprüche, wobei die erste und die zweite Sende-Empfangs-Station (4b, 4a) Teil eines drahtlosen Sensor-Netzwerks (4a, 4b, 4c, 5) sind, das ferner eine Sende-Empfangs-Station (5) aufweist, die für eine Funktion als Schnittstelle zum Sammeln und Übertragen von Daten in Bezug auf detektierte vorbeifahrende Fahrzeuge (3) an eine entferntes Steuerzentrale (6) eingerichtet ist.

## Revendications

1. Système (1) de surveillance de véhicules passant le long d'une route (2), **caractérisé par** une première station émettrice-réceptrice (4b) et au moins une deuxième station émettrice-réceptrice (4a), configurées pour communiquer entre elles via des signaux sans fil (Sₜ₍ᵢ₎) et disposées sur des côtés opposés de la route (2) de manière que les signaux sans fil (Sₜ(ᵢ₎) échangés entre elles entrecoupent des véhicules de passage (3) ; la première station émettrice-réceptrice (4b) étant configurée en outre pour détecter des véhicules de passage (3) sur la base de signaux sans fil reçus (Sₜ₍ᵢ₎) transmis par la deuxième station émettrice-réceptrice (4a), en :
- calculant une puissance de signal de référence (P_{mi-ref}) sur la base des puissances (Pᵢ) de signaux sans fil (Sₜ₍ᵢ₎) reçus en l'absence de véhicule de passage (3) ou d'autres interférences qui, autrement, entraîneraient une réduction des puissances des signaux sans fil reçus (Sₜ₍ᵢ₎) ;
- comparant la puissance d'un signal sans fil reçu (Sₜ₍ᵢ₎) avec la puissance du signal de référence (P_{mi-ref}) ; et
- détectant un véhicule de passage (3) sur la base d'un résultat de la comparaison ;
dans lequel la première station émettrice-réceptrice (4a) est configurée pour calculer la puissance du signal de référence (P_{mi-ref}), en :
- calculant et mémorisant des puissances (Pᵢ) d'un nombre donné de signaux sans fil (Sₜ₍ᵢ₎) reçus en l'absence de véhicules de passage (3) ou d'autres interférences qui, autrement, entraîneraient une réduction des puissances des signaux sans fil reçus (Sₜ₍ᵢ₎) ; et
- calculant la puissance du signal de référence (P_{mi-ref}) sur la base des puissances mémorisées (Pᵢ) ;
et dans lequel la première station émettrice-réceptrice (4a) est configurée en outre pour calculer et mémoriser des puissances (Pᵢ) d'un nombre donné de signaux sans fil (Sₜ₍ᵢ₎) reçus en l'absence de véhicules de passage (3) ou d'autres interférences qui, autrement, entraîneraient une réduction des puissances des signaux sans fil reçus (Sₜ₍ᵢ₎), en :
- calculant et mémorisant des puissances initiales (Pᵢ) d'un nombre initial donné de signaux sans fil reçus (Sₜ₍ᵢ₎) ;
- calculant une puissance moyenne (Pₘ₁) sur la base des puissances initiales mémorisées (Pᵢ) ;
- calculant des puissances (Pᵢ) de signaux sans fil reçus subséquemment (Sₜ₍ᵢ₎) ;
- comparant les puissances (Pᵢ) de signaux sans fil reçus subséquemment (Sₜ₍ᵢ₎) à la puissance moyenne (Pₘ₁) ;
- si la puissance (Pᵢ) d'un signal sans fil reçu subséquemment (Sₜ₍ᵢ₎) est égale ou supérieure à la puissance moyenne (Pₘᵢ) :
-- en remplaçant une des puissances initiales mémorisées (Pᵢ) par la puissance (Pᵢ) du signal sans fil reçu subséquemment (Sₜ₍ᵢ₎) ; et
-- en recalculant la puissance moyenne (Pₘ₁) jusqu'à ce que toutes les puissances initiales mémorisées (Pᵢ) aient été remplacées ;
- quand toutes les puissances initiales mémorisées (Pᵢ) ont été remplacées :
- en calculant des puissances (Pᵢ) de signaux sans fil reçus subséquemment (Sₜ₍ᵢ₎) ;
- en comparant les puissances (Pᵢ) de signaux sans fil reçus subséquemment (Sₜ₍ᵢ₎) à la puissance moyenne calculée en dernier (Pₘᵢ) ;
- en mémorisant des puissances (Pᵢ) d'un nombre donné de signaux sans fil reçus subséquemment (Sₜ₍ᵢ₎) et qui sont égales ou supérieures à la puissance moyenne calculée en dernier (Pₘᵢ) ; et
- en calculant la puissance du signal de référence (P_{mi-ref}) sur la base des puissances mémorisées (Pᵢ).

2. Système selon la revendication 1, dans lequel la première station émettrice-réceptrice (4a) est configurée pour calculer la puissance du signal de référence (P_{mi-ref}) comme une moyenne des puissances mémorisées (Pᵢ).

3. Système selon la revendication 1 ou 2, dans lequel la puissance (Pᵢ) d'un signal sans fil reçu subséquemment (Sₜ₍ᵢ₎) remplace la plus antérieure parmi les puissances initiales mémorisées (Pᵢ).

4. Système selon l'une quelconque des revendications précédentes, dans lequel la puissance moyenne (Pₘ₁) est calculée comme une moyenne des puissances initiales mémorisées (Pᵢ).

5. Système selon l'une quelconque des revendications précédentes, dans lequel la première station émettrice-réceptrice (4a) est configurée pour détecter un véhicule de passage (3) sur la base d'un résultat de la comparaison de la puissance d'un signal sans fil reçu (Sₜ₍ᵢ₎) avec la puissance du signal de référence (P_{mi-ref}) :
- si la puissance du signal sans fil reçu (Sₜ₍ᵢ₎) est inférieure à la puissance du signal de référence (P_{mi-ref}), en comparant la puissance du signal sans fil reçu subséquemment (Sₜ₍ᵢ₎) avec une première valeur de seuil (P_{Trsh_1}) inférieure à la puissance du signal de référence (P_{mi-ref}) ; et
- en détectant un véhicule de passage (3) si la puissance d'un signal sans fil reçu (Sₜ₍ᵢ₎) est inférieure à la première valeur de seuil (P_{Trsh_1}).

6. Système selon la revendication 5, dans lequel la première station émettrice-réceptrice (4a) est configurée pour détecter un véhicule de passage (3) sur la base d'un résultat de la comparaison de la puissance d'un signal sans fil reçu (Sₜ₍ᵢ₎) avec la puissance du signal de référence (P_{mi-ref}) en outre :
- si la puissance du signal sans fil reçu (Sₜ₍ᵢ₎) est inférieure à la première valeur de seuil (P_{Trsh_1}), en comparant la puissance du signal sans fil reçu subséquemment (Sₜ₍ᵢ₎) avec une deuxième valeur de seuil (P_{Trsh_2}) inférieure à la première valeur de seuil (P_{Trsh_1}) ; et
- en détectant un véhicule de passage (3) si la puissance d'un signal sans fil reçu (Sₜ₍ᵢ₎) est de plus inférieure à la deuxième valeur de seuil (P_{Trsh_2}).

7. Système selon l'une quelconque des revendications précédentes, dans lequel les première et deuxième stations émettrices-réceptrices (4b, 4a) font partie d'un réseau de capteurs sans fil (4a, 4b, 4c, 5), qui comprend en outre une station émettrice-réceptrice (5) configurée pour fonctionner comme une passerelle pour collecter et transmettre à un centre de contrôle à distance (6) les données relatives aux véhicules de passage détectés (3).
